# EUROPÄISCHE PATENTSCHRIFT

(11) **EP 0 997 334 B1**
(45) Veröffentlichungstag und Bekanntmachung des Hinweises auf die Patenterteilung: **04.05.2005**
(21) Anmeldenummer: 99118224.7
(22) Anmeldetag: 14.09.1999
(51) Int. Cl.: B60J 7/12, B60J 7/10

(54) **Kraftfahrzeug mit einem faltbaren Verdeck**
Motor vehicle equipped with a foldable top
Véhicule automobile équipé d'un toit pliant

(30) Priorität: 28.10.1998 DE 29819187 U
(43) Veröffentlichungstag der Anmeldung: 03.05.2000
(73) Patentinhaber: Wilhelm Karmann GmbH, 49084 Osnabrück (DE)
(72) Erfinder: Schonhorst, Heiko, 49492 Westerkappeln (DE); Hüdepohl, Stefan, 49143 Bissendorf (DE)
(74) Vertreter: Busse & Busse Patentanwälte

(56) Entgegenhaltungen:
- EP-A- 0 806 313
- US-A- 5 269 582
- US-A- 5 765 903

## Beschreibung

Die Erfindung bezieht sich auf ein Kraftfahrzeug mit einem faltbaren Verdeck in einer Ausbildung gemäß dem Oberbegriff des Patentanspruchs 1.

Der Bezug eines derartigen Verdecks ist an seitlichen Randbereichen mit Rahmenteilen verbunden, die die äußere Form des Bezuges begrenzen, diesen spannen und eine Abdichtung gegenüber Seitenfenstern, dem Windschutzscheibenrahmen oder einem rückwärtigen Karosseriebereich bewirken.

Aus der EP 0 509 326 B1 ist bekannt, Leistenabschnitte mit den seitlichen Verdeckbereichen zu vernähen. Diese sind über ein zusätzliches Befestigungsprofil, das ebenso wie die Leistenabschnitte dreidimensional ausgeformt und an die Kontur der Rahmenteile angepaßt ist, mit letzteren verschraubt. Die Montage ist daher aufwendig und in mehreren Arbeitsgängen durchzuführen. Die Verformung der genannten Teile bedingt hohe Herstellungskosten.

Aus der EP-A-806 313 ist ein Cabriolet-Fahrzeug mit einem eine faltbare Verdeck-Dachhaut tragenden Verdeckgestell bekannt, bei dem als Seitenscheibenhalterung ein zweiteiliges elastisches Dichtprofil vorgesehen ist, das über eine Schraubverbindung mit einem Profilteil zu verbinden ist. Ist hier der Wechsel eines Verdeckes erforderlich, ist es zwingend notwendig, daß Dichtungselement ebenfalls auszuwechseln.

Es ist Aufgabe der vorliegenden Erfindung, die Randbereiche von Verdecken der eingangs genannten Art an Rahmenteilen in baulich einfacher Weise festzulegen.

Zur Lösung dieser Aufgabe zeichnet sich das Kraftfahrzeug der eingangs genannten Art dadurch aus, daß die Leistenabschnitte über, einen Klemmeingriff bewirkende Federklammern an den Rahmenteilen gehalten sind.

Durch die erfindungsgemäße Ausbildung des Faltverdecks kann in einem Montageschritt die Festlegung an den Rahmenteilen erfolgen. Die Leistenabschnitte sind dabei mit Federklammem auf die Leistenabschnitte aufgesetzt, die sich durch das Einstecken in entsprechenden Nuten der Rahmenteile in den Leistenabschnitten festkrallen und diese gegen ein anschließendes Herausziehen sichern. Ein weiteres Verschrauben, Verkleben oder anderweitiges Befestigen der Leistenabschnitte an den Rahmenteilen ist dadurch entbehrlich. Die Montage umfaßt allein ein Einstecken der Leistenabschnitte mit aufgesteckten Federklammer in die Nuten. Die Anzahl der verwendeten Bauteile ist gering. Des weiteren ist von erheblichem Vorteil, daß im Falle des Wechselns des Verdeckes Dichtungsprofile nicht gewechselt werden müssen.

In weiterer Ausgestaltung der Erfindung sind die Leistenabschnitte als planebene Materialstreifen ausgebildet, so daß eine dreidimensionale Formgebung der Leistenabschnitte entbehrlich ist. Dadurch sind die Herstellungskosten dieser Bauteile erheblich verringert.

Wenn die Leistenabschnitte aus einem Kunststoffmaterial bestehen und aus einer Kunststoffplatte ausgestanzt sind, ergibt sich eine sehr einfache und kostengünstige Herstellung dieser Bauteile.

Die Montage kann zusätzlich vereinfacht sein, wenn in Aufnahmenuten der Rahmenteile bzw. an den Leistenabschnitten vorstehende Positionierungshilfen bzw. Ausnehmungen vorgesehen sind, die komplementär ineinandergreifen und dadurch die Längsausrichtung der Leistenabschnitte an den Rahmenteilen sicherstellen.

Wenn die Leistenabschnitte mit dem Verdeckrandbereich vernäht sind und außenseitig ein weiterer Materialstreifen - besonders vorteilhaft mit der selben Naht - gehalten ist, kann letzerer als Regenrinne wirken, ohne daß hierfür ein zusätzlicher Montageschritt erforderlich wäre. Diese Regenrinne kann beispielsweise über einen gummierten Streifen, der einen nach außen gebogenen Vorsprung aufweist, gebildet sein.

Weitere Vorteile und Einzelheiten ergeben sich aus einem nachfolgend beschriebenen und in der Zeichnung dargestellten Ausführungsbeispiel des Gegenstands der Erfindung. In der Zeichnung zeigt:

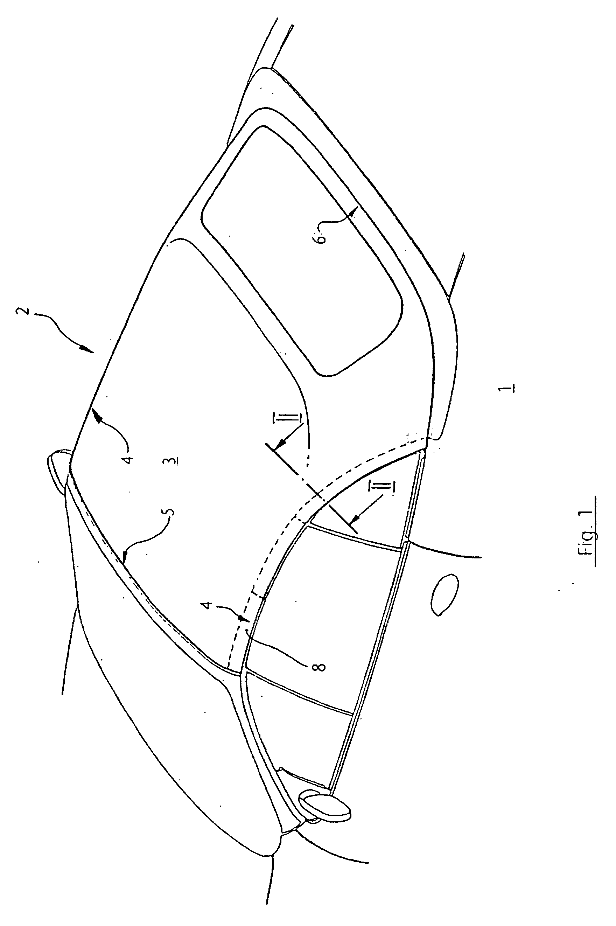

- Fig. 1: ein erfindungsgemäßes Kraftfahrzeug in Ausschnittsansicht schräg von oben,
- Fig. 2: einen Schnitt entlang der Linie II-II in Fig. 1,
- Fig. 3: einen seitlichen Leistenabschnitt in Draufsicht.

Das Kraftfahrzeug 1 weist ein faltbares Verdeck 2 auf, dessen Bezug 3 an seitlichen Randbereichen 4 sowie an vorderen und hinteren Randbereichen 5 und 6 mit Rahmenteilen 7, die den Bezug 3 spannen und das Verdeck 2 in Form halten, verbunden ist. Der Bezug 3 muß nicht über seine gesamte Längserstreckung festgelegt sein, sondern einzelne Bereiche können auf die Rahmenteile 7 verbindungsfrei aufgelegt sein, um hier eine Faltung des Bezuges 3 beim Öffnen des Verdecks 2 zu ermöglichen. Die Rahmenteile 7 können sowohl als Profile, beispielsweise aus Stahl oder Leichtmetallegierungen, als auch beispielsweise im vorderen Verdeckbereich plattenförmig ausgebildet sein, so daß seitliche Randbereiche 4 und der vordere Randbereich 5 an einer ein gemeinsames Rahmenteil 7 bildenden Platte gehalten sein können. Im Heckabschlußbereich 6 kann das Verdeck 2 an einem Heckspriegel bzw. Spannbügel gehalten sein.

Der Bezug 3 ist in seinen äußeren Randbereichen 4, 5, 6 jeweils mit Leistenabschnitten 8 verbunden, die sich im wesentlichen parallel zu den Randbereichen 4, 5, 6 erstrecken und mit dem Bezug 3 fest verbunden sind. Im vorliegenden Ausführungsbeispiel ist die Verbindung durch Nähte 9, 10 gebildet. Auch ein Verkleben oder Verschweißen ist möglich. Die Leistenabschnitte 8 sind vorteilhaft zwischen Gelenken der Rahmenteile 7 einstückig ausgebildet und folgen deren Längserstrekkung. An den den Nähten 9 und 10 abgewandten freien Enden 11 der Leistenabschnitte 8 sind diese in eine als Tasche ausgebildete Aufnahmenut 12 der Rahmenteile 7 eingesteckt. Dabei sind sie von dem Rahmenteil 7 klemmend gehalten und dazu mit einzelnen Federklammern 13 bestückt , die mit in die Leistenabschnitte 8 eindringenden Federn 14 versehen sind und bei Einschieben in die Aufnahmenut 12 einen festen Sitz der Leistenabschnitte 8 in dieser bewirken. Die einzelnen Federklammern 13 sind, zueinander beabstandet, vor der Montage auf die Leistenabschnitte 8 aufgesetzt.

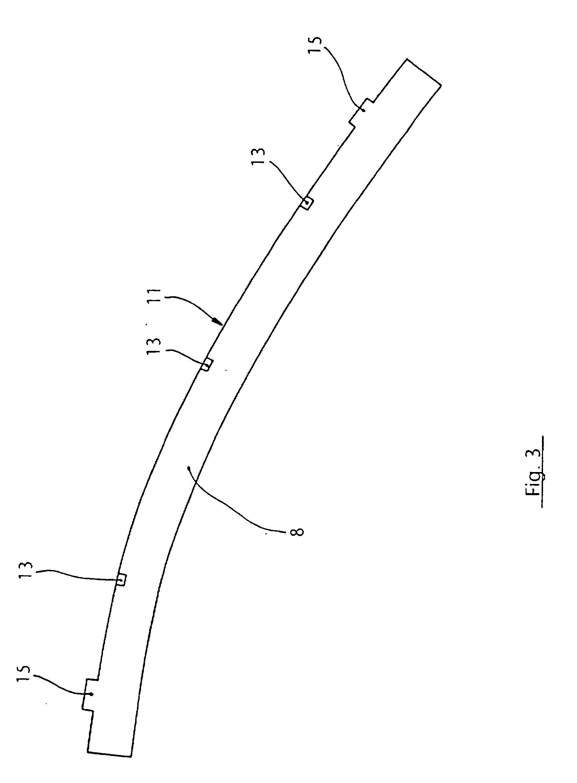

Die Leistenabschnitte 8 sind als planebene Materialstreifen aus einem Kunststoff ausgebildet, beispielsweise aus Polypropylen. Hierzu können die Leistenabschnitte 8 aus einer Platte ausgestanzt werden, wobei deren Verlauf, wie in Fig. 3 sichtbar, jeweils an einen Abschnitt des Verdeckrandes 4 bzw. 5 bzw. 6 angepaßt ist. Die Leistenabschnitte 8 können auch als Spritzteile ausgebildet sein. Die Anpassung ihres Verlaufs ist allerdings nur in einer Ebene erforderlich, so daß eine weitere Umformung der Materialstreifen 8 entbehrlich ist.

Die Materialstreifen 8 weisen an ihrem freien Endbereich 11 vorspringende Positionierungsanformungen 15 auf, die in komplementäre Ausnehmungen - nicht eingezeichnet - im stirnseitigen Endbereich 16 der Rahmenteile 7 eingreifen, so daß eine Unverschieblichkeit der planebenen Materialstreifen 8 in den Aufnahmenuten 12 und gleichzeitig eine paßgenaue Ausrichtung gewährleistet sind.

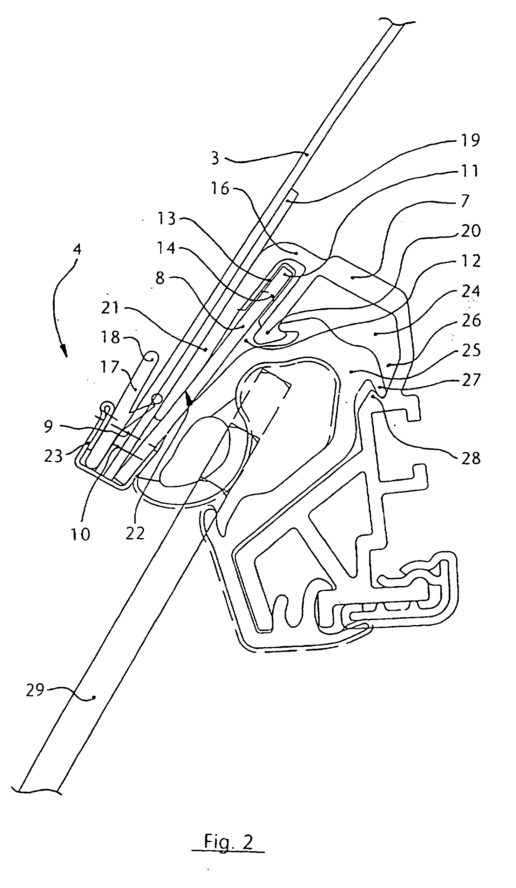

In montierter Stellung der Teile sind die Leistenabschnitte 8 außenseitig von dem Bezug 3 übergriffen (Fig. 2). Weiterhin ist an der Außenseite des Bezugs 3 ein weiterer Materialstreifen 17 angenäht, wobei zum Vernähen dieselbe Naht 9 bzw. 10 verwendet werden kann. Dieser weitere Materialstreifen 17 besteht aus elastischem Material (beispielsweise Gummi) und bildet mit seinem gegenüber dem Bezug 3 abstehenden oberen Kantenbereich 18 eine Regenrinne aus.

Um ein Ausbeulen des Bezugs 3 im Bereich seiner Anlage an das Rahmenteil 7 zu verhindern und gleichzeitig einen Abriebschutz darzustellen, kann auf der Innenseite des Bezuges 3 eine Verstärkung 19 (beispielsweise aus einem Kunststoff wie PVC) angebracht sein. Die Festlegung an dem Bezug 3 kann beispielsweise durch HF-Schweißen erfolgen, zudem wird die Verstärkung 19 im Bereich der Nähte 9 und 10 mit festgelegt.

Die Aufnahmenut 12 ist durch einen inneren Ausleger 20 und einen äußeren Ausleger 21 gebildet, wobei der äußere Ausleger 21 einen konisch zulaufenden Endbereich 22 ausbildet. Hierdurch ist ein gewisses Abspreizen des freien Endes 11 des Leistenabschnitts 8 gegenüber dem Bezug 3 bewirkt, so daß dieser trotz hoher Spannung geradlinig vom Randbereich weiterführen kann, ohne sich im Bereich der Anlage an das Rahmenteil 7 auszubeulen. Ein Einfaßband 23 kann den randseitigen Endbereich 4, 5, 6 umgreifen und vor Beschädigung zusätzlich schützen.

Bei der Montage werden das Einfaßband 23 mit der Regenrinne 17, der möglichen Verstärkung 19 und den Leistenabschnitten 8 in einem Arbeitsgang an den Nähten 9 bzw. 10 vernäht. Zur weiteren Montage werden lediglich noch die Federklammern 13 auf das freie Ende 11 des Leistenabschnittes 8 aufgesetzt, anschließend wird dieses freie Ende 11 in die Aufnahmenut 12 des Rahmenteils 7 eingeschoben. Die Montage umfaßt daher lediglich das Vernähen, Aufstecken der Klammern 13 und Einstecken der freien Enden 11. Gegebenenfalls kann bereits vorher die Verstärkung 19 mit dem Bezug 3 verschweißt worden sein. Beim Einstecken des freien Endes 11 in die Aufnahmenut 12 drücken sich die vorstehenden Federenden 14 in das Kunststoffmaterial des Leistenabschnitts 8 ein, so daß dieser gegen ein Herausziehen gesichert wird. Ferner wird noch ein Dichtungsprofil 25 in eine weitere Aufnahmenut 24 des Rahmenteils 7 eingesetzt, beispielsweise eingeklipst, wobei Vorsprünge 27 an dem Dichtungsprofil 25 vorgesehen sein können, die hinter Hinterschneidungen 28 des Rahmenteils 7 federnd aufspreizen und diese hintergreifen. Das Dichtungsprofil 25 liegt im geschlossenen Zustand des Verdecks 2 und der Seitenscheiben 29 am oberen Rand 30 dieser Seitenscheiben 29 an und dichtet diese gegen den Randbereich 4 des Verdecks 2 ab.

Zur Demontage der Materialstreifen 8 aus den Aufnahmenuten 12 ist eine entsprechend kraftvolle Zugbewegung bei geöffnetem Verdeck 2, parallel zum Materialstreifen 8 wirkend auszuführen. Dadurch werden diese einfach aus der Aufnahmenut 12 mit den Federklammern 13 herausgelöst. Zur erneuten Montage können die Federklammem 13 durch neue ersetzt werden, die wiederum einfach aufzusetzen sind.

## Patentansprüche

1. Kraftfahrzeug (1) mit einem faltbaren Verdeck (2), dessen Bezug (3) an seinen Randbereichen (4;5;6) an Rahmenteilen (7) festgelegt ist und hierzu in diesen Randbereichen (4;5;6) mit sich parallel zu deren Verlauf erstreckenden Leistenabschnitten (8) zur Festlegung an den Rahmenteilen (7) verbunden ist, **dadurch gekennzeichnet, daß** die Leistenabschnitte (8) über, einen Klemmeingriff bewirkende Federklammern (13) an den Rahmenteilen (7) gehalten sind.

2. Kraftfahrzeug nach Anspruch 1, **dadurch gekennzeichnet, daß** die Rahmenteile (7) jeweils eine taschenförmige Nut (12) aufweisen, in der die Leistenabschnitte (8) aufgenommen sind.

3. Kraftfahrzeug nach Anspruch 1 oder 2, **dadurch gekennzeichnet, daß** die Federklammer (13) auf die Leistenabschnitte (8) aufgesteckt und durch die Quererstreckung der Nut (12) zusammengepreßt sind.

4. Kraftfahrzeug nach einem der Ansprüche 1 bis 3, **dadurch gekennzeichnet, daß** zur Ausrichtung der Leistenabschnitte (8) zumindest je eine Ausnehmung und komplementäre vorspringende Positionierungsanformung (15) an den Leistenabschnitten bzw. Rahmenteilen vorgesehen sind.

5. Kraftfahrzeug nach einem der Ansprüche 1 bis 4, **dadurch gekennzeichnet, daß** die Leistenabschnitte (8) durch planebene Materialstreifen gebildet sind.

6. Kraftfahrzeug nach Anspruch 5, **dadurch gekennzeichnet, daß** die Materialstreifen (8) aus einem Kunststoffmaterial bestehen.

7. Kraftfahrzeug nach Anspruch 6, **dadurch gekennzeichnet, daß** die Materialstreifen (8) aus Polypropylen bestehen.

8. Kraftfahrzeug nach einem der Ansprüche 5 bis 7, **dadurch gekennzeichnet, daß** die Materialstreifen (8) aus einer Platte ausgestanzt sind.

9. Kraftfahrzeug nach einem oder mehreren der Ansprüche 1 bis 8, **dadurch gekennzeichnet, daß** die Materialstreifen (8) mit dem Bezug (3) vernäht, verklebt oder verschweißt oder von diesem außenseitig übergriffen sind.

10. Kraftfahrzeug nach Anspruche 9, **dadurch gekennzeichnet, daß** außenseitig des Bezugs (3) ein weiteres Materialband (17) angenäht ist.

11. Kraftfahrzeug nach einem oder mehreren der Ansprüche 1 bis 10, **dadurch gekennzeichnet, daß** das Verdeck (2) seitlich begrenzende Rahmenteile (7) sowie eine weitere Aufnahmenut (24) für ein den Randbereich (4) gegen die Seitenscheiben (29) abdichtendes Dichtungsprofil (25) aufweisen.

12. Kraftfahrzeug nach Anspruch 11, **dadurch gekennzeichnet, daß** das Dichtungsprofil (25) in der Aufnahmenut (24) federnd gehalten ist.

## Claims

1. Motor vehicle (1) having a foldable soft top (2) whose covering (3) is fastened to frame parts (7) in its edge regions (4, 5, 6) and for this purpose is connected, in said edge regions (4, 5, 6), to strip portions (8) for fastening to the frame parts (7), which strip portions (8) extend parallel to the extent of the edge regions (4, 5, 6), **characterised in that** the strip portions (8) are held to the frame parts (7) by spring-clips (13) which produce a nipped engagement.

2. Motor vehicle according to claim 1, **characterised in that** the frame parts (7) each have a pocket-like groove (12) in which the strip portions (8) are received.

3. Motor vehicle according to claim 1 or 2, **characterised in that** the spring clips (13) are clipped onto the strip portions (8) and are pressed together as a result of the transverse extension of the groove (12).

4. Motor vehicle according to one of claims 1 to 3, **characterised in that**, to enable the strip portions (8) to be aligned, at least one recess and at least one complementary, projecting positioning formation (15) are provided in and on each of the frame parts and strip portions respectively.

5. Motor vehicle according to one of claims 1 to 4, **characterised in that** the strip portions (8) are formed by plane, level strips of material.

6. Motor vehicle according to claim 5, **characterised in that** the strips of material (8) are composed of a plastics material.

7. Motor vehicle according to claim 6, **characterised in that** the strips of material (8) are composed of polypropylene.

8. Motor vehicle according to one of claims 5 to 7, **characterised in that** the strips of material (8) are stamped from a sheet.

9. Motor vehicle according to one or more of claims 1 to 8, **characterised in that** the strips of material (8) are sewn, bonded or welded to the covering (3) or the latter fits over them externally.

10. Motor vehicle according to claim 9, **characterised in that** a further band of material (17) is sewn on on the outside of the covering (3).

11. Motor vehicle according to one or more of claims 1 to 10, **characterised in that** the soft top (2) has frame parts (7) forming lateral boundaries, and a further receiving groove (24) for a sealing profile (25) which seals off the edge region (4) from the side window-glasses (29)

12. Motor vehicle according to claim 11, **characterised in that** the sealing profile (25) is held resiliently in the receiving groove (24).

## Revendications

1. Véhicule automobile (1) équipé d'une capote repliable (2) dont le revêtement (3) est fixé à des parties d'armature (7) dans ses régions marginales (4 ; 5 ; 6) et y est assemblé, à des segments de baguettes (8) qui s'étendent parallèlement au tracé des régions marginales (4 ; 5 ; 6) et servent pour la fixation aux parties d'armature (7),
**caractérisé en ce que**
les segments de baguettes (8) sont fixés aux parties d'armature (7) par des pinces à ressort (13) qui réalisent une prise par serrage.

2. Véhicule automobile selon la revendication 1,
**caractérisé en ce que**
les parties d'armature (7) présentent chacune une rainure (12) en forme de poche dans laquelle les segments de baguettes (8) sont logés.

3. Véhicule automobile selon la revendication 1 ou 2,
**caractérisé en ce que**
les pinces à ressort (13) sont emboîtées sur les segments de baguettes (8) et resserrées par le profil transversal de la rainure (12).

4. Véhicule automobile selon une des revendications 1 à 3,
**caractérisé en ce que**
pour l'alignement des segments de baguettes (8), au moins un évidement et une formation de positionnement saillante complémentaire (15) sont prévus respectivement sur les parties de baguettes et sur les parties d'armature.

5. Véhicule automobile selon une des revendications 1 à 4,
**caractérisé en ce que**
les segments de baguettes (8) sont constitués par des bandes métalliques planes.

6. Véhicule automobile selon la revendication 5,
**caractérisé en ce que**
les bandes de matière (8) sont en matière plastique.

7. Véhicule automobile selon la revendication 6,
**caractérisé en ce que**
les bandes de matière (8) sont en polypropylène.

8. Véhicule automobile selon une des revendications 5 à 7,
**caractérisé en ce que**
les bandes de matière (8) sont découpées dans une plaque.

9. Véhicule automobile selon une ou plusieurs des revendications 1 à 8,
**caractérisé en ce que**
les bandes de matière (8) sont cousues, collées ou soudées au revêtement (3) ou recouvertes extérieurement par ce dernier.

10. Véhicule automobile selon la revendication 9,
**caractérisé en ce qu'**
une bande de matière supplémentaire (17) est cousue sur le côté extérieur du revêtement (3).

11. Véhicule automobile selon une ou plusieurs des revendications 1 à 10,
**caractérisé en ce que**
la capote (2) présente des parties d'armature (7) qui la limitent latéralement ainsi qu'une rainure de logement supplémentaire (24) prévue pour un profilé d'étanchéité (25) qui établit l'étanchéité entre la région marginale (4) et les vitres latérales.

12. Véhicule automobile selon la revendication 11,
**caractérisé en ce que**
le profilé d'étanchéité (25) est retenu dans la rainure de logement (24) par élasticité
